## Europäisches Patentamt
## European Patent Office
## Office européen des brevets

(11) Numéro de publication: **0 015 190**
**B1**

(12) **FASCICULE DE BREVET EUROPEEN**

(45) Date de publication du fascicule de brevet:
**05.05.82**

(21) Numéro de dépôt: **80400191.5**

(22) Date de dépôt: **07.02.80**

(51) Int. Cl.³: **B 60 N 1/10,** B 60 R 21/10

(54) Siège transformable de véhicule automobile équipé d'un dispositif d'accrochage pour ceintures de sécurité.

(30) Priorité: **22.02.79 FR 7904525**

(43) Date de publication de la demande:
**03.09.80 Bulletin 80/18**

(45) Mention de la délivrance du brevet:
**05.05.82 Bulletin 82/18**

(84) Etats contractants désignés:
**DE GB IT**

(56) Documents cités:
**EP-A-0 015 179**
**FR-A-1 508 000**
**FR-A-2 044 536**
**FR-A-2 085 077**
**FR-A-2 208 361**
**US-A-3 219 387**
**US-A-3 338 633**
**US-A-3 606 454**
**US-A-4 133 556**

(73) Titulaire: **AUTOMOBILES PEUGEOT, 75, avenue de la Grande Armée, F-75116 Paris (FR)**
Titulaire: **SOCIETE ANONYME AUTOMOBILES CITROEN, 117 à 167, Quai André Citroen, F-75747 Paris Cedex 15 (FR)**

(72) Inventeur: **Zaccariotto, Moise, 13 Rue de Monttessuy, F-75007 Paris (FR)**

(74) Mandataire: **Lavoix, Jean et al, c/o Cabinet Lavoix 2, Place D'Estienne D'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG.

Siège transformable de véhicule automobile équipé d'un
dispositif d'accrochage pour ceintures de sécurité.

L'invention concerne un siège pouvant être transformé de manière à modifier le volume de chargement du compartiment à bagages d'un véhicule automobile. Elle s'applique plus précisément à un siège arrière comportant une assise montée articulée autour d'un axe transversal situé au voisinage de sa partie avant, ledit siège étant équipé d'un dispositif d'accrochage pour ceintures de sécurité.

Lorsqu'un siège ainsi transformable doit être équipé d'une ceinture de sécurité pour chacune de ses places, il faut prévoir, pour chaque ceinture, un dispositif d'accrochage situé vers l'arrière de l'assise, au voisinage du plan médian longitudinal du véhicule. Pour éviter d'avoir à renforcer exagérément la structure de l'assise, il est souhaitable que ces dispositifs d'ancrage soient reliés au plancher du véhicule.

Il est, par exemple, possible de prévoir, dans l'assise, un passage pour des bras fixés directement sur le plancher et comportant chacun un organe d'accrochage pour une ceinture (Brevet US-A-4 133 556). Cette disposition présente notamment les inconvénients suivants: les bras et leur organe d'accrochage frottent sur la garniture de l'assise, à chaque manœuvre, provoquant son usure; il est malaisé de réintroduire les bras dans le passage prévu dans l'assise lorsque l'on replace celle-ci en position opérationnelle.

Suivant une autre conception (Demande de brevet EP-A-0015179 citée au titre de l'article 54(3) de la CBE), le dispositif d'accrochage de la ceinture est mobile avec l'assise et des moyens sont prévus pour relier ce dispositif d'accrochage au plancher du véhicule lorsque le siège est en position d'utilisation, ces moyens comportant un pêne porté par le dispositif d'accrochage, coopérant avec une gâche montée pivotante sur le plancher.

L'invention se rapporte à cette dernière conception. Elle a pour but de fournir un agencement particulièrement simple garantissant que la liaison entre le dispositif d'accrochage et le plancher est réalisée en toutes circonstances, dès que le siège est occupé.

Elle a donc pour objet un siège transformable de véhicule comprenant une assise articulée au voisinage de sa partie avant autour d'un axe transversal, un dispositif d'accrochage pour ceintures de sécurité fixé sur l'assise, et des moyens de liaison du dispositif d'accrochage au plancher du véhicule, comportant un pêne porté par le dispositif d'accorchage, coopérant avec une gâche montée pivotante sur le plancher.

Suivant l'invention, ce siège est caractérisé en ce que la gâche est sollicitée par un premier ressort vers une position d'ouverture, et en ce qu'elle est entraînée par le pêne en position d'engagement sous l'effet d'une charge verticale appliquée à l'assise, un verrou de blocage de la gâche en position engagée étant sollicité par un deuxième ressort vers sa position de blocage et étant associé à des moyens manuels de dégagement.

Un exemple de réalisation de l'invention fait l'objet de la description qui suit, en référence aux dessins joints dans lesquels:

– la Fig. 1 est une vue en perspective d'un siège muni du dispositif d'accrochage, agencé suivant l'invention;

– la Fig. 2 est un détail agrandi de la partie arrière médiane de l'assise;

– les Fig. 3, 4 et 5 sont des vues latérales à plus grande échelle, suivant la flèche F de la figure 1, du dispositif d'accrochage, pour différentes positions;

– les Fig. 6, 7 et 8 sont des coupes à plus grande échelle au droit du dispositif d'accrochage pour les positions correspondant respectivement à celles des Fig. 3, 4 et 5.

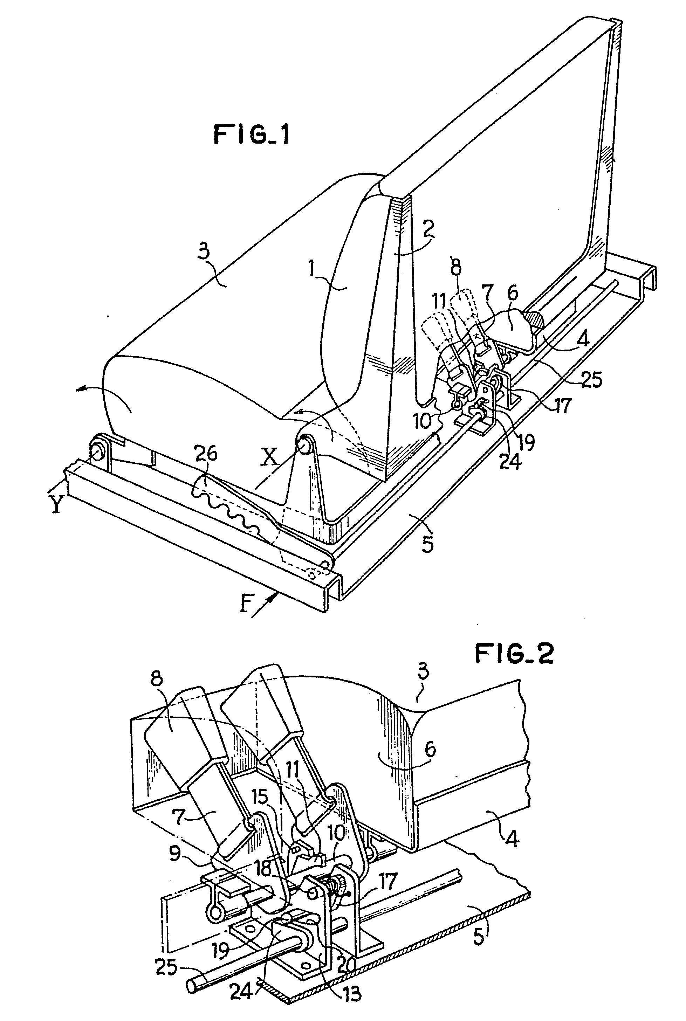

On voit sur la Fig. 1, un siège arrière de véhicule automobile constitué, principalement, par un dossier 1, muni d'une armature 2 et une assise 3, munie d'une armature 4. Le dossier 1 est articulé, à sa base, sur l'arrière de l'assise 3, autour d'un axe transversal X, tandis que l'assise est articulée, à sa partie avant, sur le plancher 5 du véhicule, autour d'un axe transversal Y.

Au voisinage de la partie arrière médiane de l'assise est prévu un évidement 6 pour le passage de deux bras 7 munis chacun d'un organe d'accrochage 8 pour une ceinture de sécurité, non représentée. Chaque bras est relié à une platine 9 et les deux platines sont portées par une barre 10, solidaire de l'armature 4 de l'assise, et disposée dans l'évidement 6, transversalement par rapport au véhicule.

La barre 10 constitue un pêne destiné à coopérer avec une gâche 11 montée articulée sur un axe 12 disposé entre les deux branches d'une chape 13 fixée sur le plancher 5.

Un ressort 14 tend à repousser la gâche 11 en appui sur un pion 15 porté par la chape. Dans cette position, le pêne 10 est libéré de la gâche 11 et est repoussé vers le haut par un flan 16 de la gâche formant came.

Dans le même plan que la gâche 11 est disposé un verrou 17 articulé sur un axe 18 disposé entre les branches de la chape 13. Ce verrou porte un ergot 19 qui traverse l'une des branches de la chape 13 dans une lumière 20. Un ressort 21 tend à repousser le verrou 17 dans le sens pour lequel son extrémité libre 22 s'engage dans un cran 23 de la gâche 11.

Le verrou 17 peut être entrainé dans le sens pour lequel il libère la gâche 11, par action sur l'ergot 19 d'un levier 24 porté par une barre transversale 25 montée rotative par rapport au plancher 5 et munie, à au moins une de ses extrémités, d'une poignée de manœuvre 26.

L'agencement qui vient d'être décrit fonctionne de la façon suivante:

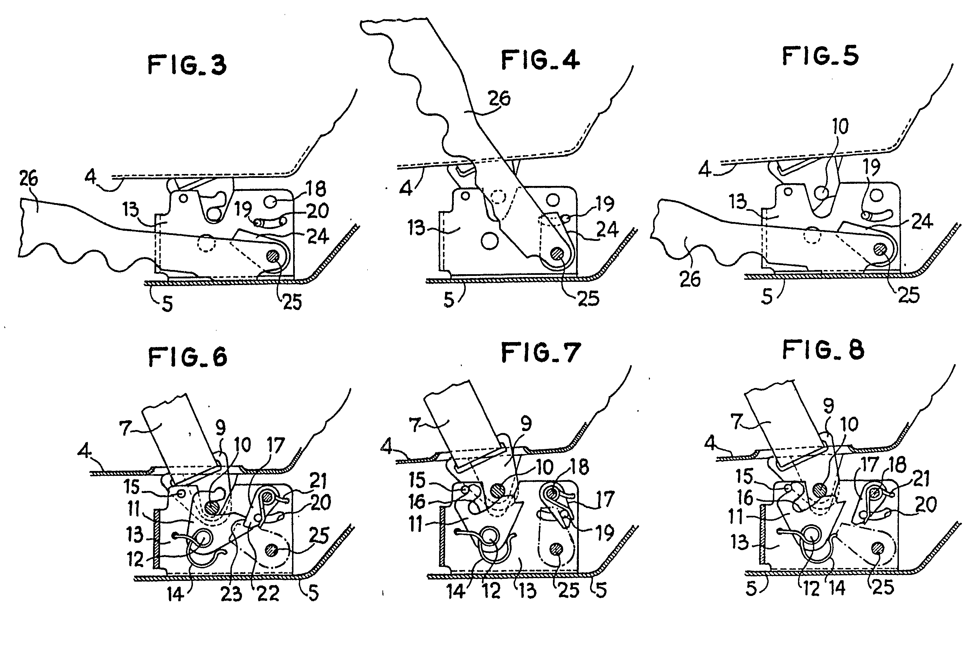

Lorsque l'assise est correctement en place (Fig. 3 et 6), le pêne 10 est emprisonné entre les flancs de la gâche 11 et les branches de la chape 13 tandis que la gâche 11 est bloquée par le verrou 17. Si un effort de traction est exercé sur l'un ou l'autre des bras 7, cet effort est transmis au plancher 5 et il n'y a aucun risque de voir le pêne 10 s'échapper.

Pour libérer le siège, la poignée 26 est relevée manuellement (Fig. 4 et 7). Dans ce mouvement, le levier 24, agissant sur l'ergot 19 repousse le verrou 17 qui libère la gâche 11. Celle-ci, entraînée par son ressort 14 vient en appui sur le pion 15 et son flan 16 libère, en le soulevant, le pêne 10. La poignée 26 étant relâchée, le verrou 17 reprend sa position initiale, mais le pêne 10 reste libre (Fig. 5 et 8). L'assise 3 peut être basculée autour de son articulation d'axe Y.

Si l'assise 3 est ensuite remise en place trop doucement, il peut se faire que l'engagement du pêne 10 dans la gâche 11 ne soit pas réalisé. On se trouve alors dans la position des Fig. 5 et 8. Mais, dès qu'un passager prend place sur l'assise 3, son poids repousse le pêne 10, provoquant le basculement de la gâche 11 qui rest bloquée par le verrou 17 dans la position de la Fig. 6.

On voit que le dispositiv décrit garantit que la liaison entre les dispositifs d'accrochage 7, 8 des ceintures de sécurité et le plancher 5 est parfaitement réalisée en toutes circonstances.

Dans l'exemple décrit, on a supposé que le dossier 1 était articulé sur l'assise 3. Il est clair que le dispositif décrit s'applique quelle que soit la cinématique du dossier.

**Revendications**

1. Siège transformable de véhicule automobile, comprenant une assise (3) articulée au voisinage de sa partie avant autour d'un axe transversal (Y), un dispositif (8) d'accrochage pour ceintures de sécurité fixé sur l'assise, et des moyens de liaison du dispositif d'accrochage au plancher (5) du véhicule comportant un pêne (10) porté par le dispositif d'accrochage et une gâche (11) montée pivotante sur le plancher (5), caractérisé en ce que la gâche est sollicitée par un premier ressort (14) vers une position d'ouverture, et en ce qu'elle est entraînée par le pêne (10) en position d'engagement sous l'effet d'une charge verticale appliquée à l'assise (3), un verrou (17) de blocage de la gâche (11) en position engagée étant sollicité par un deuxième ressort (21) vers sa position de blocage et étant associé à des moyens manuels (24, 26) de dégagement.

2. Siège suivant la revendication 1, caractérisé en ce que le pêne est constitué par une barre (10) solidaire de l'armature (4) de l'assise et disposée dans un évidement (6) ménagé dans celle-ci, transversalement par rapport au véhicule.

3. Siège suivant la revendication 2, caractérisé en ce que la gâche (11) est articulée sur un axe (12) disposé entre les deux branches d'une chape (13) fixée sur le plancher (5).

4. Siège suivant la revendication 3, caractérisé en ce que le verrou (17) de blocage de la gâche (11) est articulé sur ladite chape (13) dans un même plan que ladite gâche, l'extrémité libre (22) de ce verrou s'engageant, sous l'action du deuxième ressort (21), dans un cran (23) de la gâche (11).

5. Siège suivant l'une quelconque des revendications précédentes, caractérisé en ce que les moyens manuels de dégagement du verrou (17) comprennent un ergot (19) porté par le verrou (17) et traversant une lumière (20) ménagée dans une branche de la chape (13), un levier (24) coopérant avec ledit ergot et porté par une barre transversale (25) montée rotative par rapport au plancher (5) et munie, à au moins une de ses extrémités, d'une poignée de manœuvre (26).

**Ansprüche**

1. Umwandelbarer Fahrzeugsitz mit einem nahe seiner Frontpartie um eine Querachse (Y) schwenkbaren Sitzteil (3) mit einer Haltevorrichtung (8) für Sicherheitsgrute, befestigt am Sitzteil, und mit Mitteln zum Verbinden der Haltevorrichtung mit dem Fahrzeugboden (5), die einen von der Haltevorrichtung getragenen Riegel (10) und eine an den Fahrzeugboden (5) angelenkte Schliessklappe (11) umfassen, dadurch gekennzeichnet, dass die Schliessklappe von einer ersten Feder (14) in eine Öffnungsposition vorgespannt ist und dass sie von dem Riegel (10) unter der Wirkung einer das Sitzteil (3) vertikal beaufschlagenden Last in Eingriffsposition bewegt wird, wobei eine Klinke (17) zum Verriegeln der Schliessklappe (11) in der Eingriffsposition von einer zweiten Feder (21) in ihre Verriegelungsposition vorgespannt ist und in Wirkverbindung mit manuellen Entsperrmitteln (24, 26) steht.

2. Fahrzeugsitz nach Anspruch 1, dadurch gekennzeichnet, dass der Riegel von einer mit dem Sitzgestell (4) verbundenen und in einer Ausnehmung desselben quer zur Fahrzeugerstreckung angeordneten Stange (10) gebildet ist.

3. Fahrzeugsitz nach Anspruch 2, dadurch gekennzeichnet, dass die Schliessklappe (11) auf einer zwischen den beiden Armen eines am Fahrzeugboden befestigten Winkelrahmens (13) angeordneten Achse (12) schwenkbeweglich ist.

4. Fahrzeugsitz nach Anspruch 3, dadurch gekennzeichnet, dass die Sperrklinke (17) der Schliessklappe (11) auf dem Winkelrahmen (13) in derselben Ebene wie die Schliessklappe schwenkbar gelagert ist, wobei das freie Ende (22) dieser Klinke unter der Wirkung der zweiten Feder (21) in einen Einschnitt (23) der Schliessklappe eingreift.

5. Fahrzeugsitz nach einem der vorangehenden Ansprüche, dadurch gekennzeichnet, dass die manuellen Entsperrmittel der Klinke (17) einen von der Klinke (17) getragenen Zapfen (19) umfassen, der eine in einen Arm des Winkelrahmens (13) eingearbeitete Öffnung (20) durchsetzt, wobei ein mit dem Zapfen zusammenwirkender Hebel (24) von einer Querstange (25) getragen ist, die relativ zum Fahrzeugboden drehbar ist und an mindestens einem ihrer Enden einen Betätigungsgriff (26) aufweist.

**Claims**

1. Convertible automobile vehicle seat structure, comprising a seat (3) pivoted adjacent the front part thereof about a transverse axis (Y), a hooking device (8) for safety belts fixed to the seat, and connecting means for connecting the hooking device to the floor (5) of the vehicle, said connecting means comprise a latch (10) carried by the hooking device and a keeper (11) pivotally mounted on the floor (5), characterized in that the keeper is urged by a first spring (14) towards a released position and in that said keeper is driven by the latch (10) to a position of engagement with the latch under the effect of a vertical load applied on the seat (3), a bolt (17) for locking the keeper (11) in the engaged position thereof being biased by a second spring (21) towards its locking position and being associated with manual means (24, 26) for disengaging the bolt.

2. Seat structure as claimed in claim 1, characterized in that the latch comprises a bar (10) rigid with the reinforcement (4) of the seat and disposed in a recess (6) formed in the seat, transversely of the vehicle.

3. Seat structure as claimed in claim 2, characterized in that the keeper (11) is pivotally mounted on a pin (12) disposed between two arms of a fork (13) fixed to the floor (5).

4. Seat structure as claimed in claim 3, characterized in that said bolt (17) for locking the keeper (11) is pivotally mounted on said fork (13) in the same plane as the keeper, the free end (22) of the bolt engaging, under the bias of the second spring (21), in a recess (23) in the keeper (11).

5. Seat structure as claimed in any one of the preceding claims, characterized in that said manual means for disengaging the bolt (17) comprise a pin (19) carried by the bolt (17) and extending through an aperture (20) in a branch of the fork (13), a lever (24) co-operative with the pin and carried by a transverse rod (25) which is rotatably mounted relative to the floor (5) and provided at at least one of the ends thereof with a shifting handle (26).

1/2

# FIG_1

# FIG_2

FIG_3  FIG_4  FIG_5

FIG_6  FIG_7  FIG_8